(19)

**Europäisches Patentamt**
**European Patent Office**
**Office européen des brevets**

(11)  **EP 1 837 649 B1**

(12)  **EUROPÄISCHE PATENTSCHRIFT**

(45) Veröffentlichungstag und Bekanntmachung des Hinweises auf die Patenterteilung:
**09.02.2011  Patentblatt 2011/06**

(51) Int Cl.:
***G01N 29/036*** (2006.01)

(21) Anmeldenummer: **07005104.0**

(22) Anmeldetag: **13.03.2007**

(54) **Verfahren und Vorrichtung zur Messung der Dichte eines gasförmigen Mediums und/oder der Schallgeschwindigkeit in einem gasförmigen Medium.**

Method and device for measuring the density of a gaseous medium and/or the acoustic velocity in a gaseous medium.

Procédé et dispositif destinés à la mesure de la densité d'un milieu gazeux et/ou de la vitesse du son dans un milieu gazeux.

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **22.03.2006  DE 102006013809**

(43) Veröffentlichungstag der Anmeldung:
**26.09.2007  Patentblatt 2007/39**

(73) Patentinhaber: **Elster GmbH**
**55252 Mainz-Kastel (DE)**

(72) Erfinder: **Ulrich Ewerlin**
**44791 Bochum (DE)**

(74) Vertreter: **Schneider, Uwe**
**Patentanwalt**
**Holbeinstrasse 27**
**59423 Unna (DE)**

(56) Entgegenhaltungen:
**DE-A1- 3 741 558    FR-A- 2 493 984**
**US-A- 4 803 671**

• **GILLIS KEITH A ET AL: "Theory of the Greenspan viscometer" JOURNAL OF THE ACOUSTICAL SOCIETY OF AMERICA, AIP / ACOUSTICAL SOCIETY OF AMERICA, MELVILLE, NY, US, Bd. 114, Nr. 1, 1. Juli 2003 (2003-07-01), Seiten 166-173, XP012003533 ISSN: 0001-4966**

**Beschreibung**

Die Erfindung betrifft ein Verfahren und eine Vorrichtung zur Messung von Betriebsdichte und/oder Betriebsschallgeschwindigkeit in einem gasförmigen Medium gemäß Oberbegriff des Anspruches 1 bzw. Anspruch 22.

Im Bereich der Gasmesstechnik stößt man immer wieder auf die gleichen Messaufgaben. Eine charakteristische Größe von Erdgas, die sehr wesentlich ist, besteht in der Dichte. Die Erfassung der Dichte ist allerdings nicht trivial. Bisherige Messverfahren sind entweder teuer oder platzaufwändig.

Ein derartiges Messverfahren wird in der DE 37 41 558 A1 beschrieben, in der eine Vorrichtung zur Erfassung der Resonanzfrequenz eines schwingenden Organs grundsätzlich in Form eines Helmholtz-Resonators beschrieben wird, wobei aus der Resonanzfrequenz die Dichte und die Fließgeschwindigkeit eines Fluides ermittelt wird.. Hierbei ist das schwingende Organ grundsätzlich in Form eines Heimholtz-Resonators in einem Gehäuse angeordnet, wobei beidseits des schwingenden Organs Kammern gleichen Volumens vorgesehen sind, die von dem Fluid durchströmt werden. Hierbei wird die Schwingung des schwingenden Organs durch das Fluid beeinflusst und verändert damit abhängig von der Dichte des Fluids messbar das Schwingverhalten des schwingenden Organs. Allerdings wird nur eine einzelne Frequenz als Resonanzfrequenz gemessen, wobei die Messeinrichtung zur Vereinfachung der zugrunde liegenden Interpretation der Messwerte gezielt optimiert ist. Auch ist bei einer derartigen Anordnung keine Ermittlung der Schallgeschwindigkeit des Fluides möglich, da die ermittelte eine Frequenz dies nicht hergibt. Weiterhin handelt es sich um eine selbsterregte Schwingschaltung, deren Resonanzfrequenz nur für ein Impedanzmaximum ermittelt werden kann.

Aus der Veröffentlichung von Gillis, Keith et al..: "Theory of the Greenspan viscosimeter" in Journal of the Acoustical Society of America, AIP/ Acoustical Society of America, Melville, NY, Bd. 114, Nr. 1, 1. Juli 2003, Seiten 166-173 ist ein akustisches Modell für ein Greenspan Viskosimeter mit zwei durch einen Kanal verbundenen, gasgefüllten Kammern beschrieben, mit dem sich die Viskosität von Gasen bestimmen lässt.

Aufgabe der vorliegenden Erfindung ist es daher, eine gattungsgemäßes Verfahren und eine gattungsgemäße Vorrichtung derart weiter zu entwickeln, dass eine genauere Bestimmung der Betriebsdichte bei gleichzeitiger Möglichkeit zu Bestimmung der Betriebsschallgeschwindigkeit ermöglicht wird.

Die Lösung der erfindungsgemäßen Aufgabe ergibt sich im Hinblick auf das Verfahren aus den kennzeichnenden Merkmalen des Anspruches 1 und im Hinblick auf die Vorrichtung aus den kennzeichnenden Merkmalen des Anspruches 22 in Zusammenwirken mit den Merkmalen des jeweiligen Oberbegriffes. Weitere vorteilhafte Ausgestaltungen der Erfindung ergeben sich aus den Unteransprüchen.

Die Erfindung betreffend das Verfahren geht aus von einem Verfahren zur Messung von Betriebsdichte und/oder Betriebsschallgeschwindigkeit in einem gasförmigen Medium mit Hilfe eines schwingfähigen Schallwandlers, der in einem Gehäuse derart angeordnet ist, dass beidseitig des Schallwandlers Kammern gleichen Volumens gebildet sind, die von dem gasförmigen Medium ausgefüllt sind. Ein derartiges gattungsgemäßes Verfahren wird dadurch erfinderisch weiter gebildet, dass das gasförmige Medium in den Kammern gleichen Volumens über einen offenen Kanal definierter Abmessungen miteinander in Verbindung steht, anhand einer auf den Schallwandler aufgebrachten Erregerschwingung die insbesondere von der Dichte des gasförmigen Mediums beeinflusste Impedanz des Schallwandlers in Abhängigkeit von der Erregerfrequenz innerhalb eines festlegbaren Frequenzbereiches bestimmt wird und daraus die Betriebsdichte und/oder die Betriebsschallgeschwindigkeit des gasförmigen Mediums anhand von mindestens drei charakteristischen Frequenzen des in dem gasförmigen Medium schwingenden Schallwandlers ermittelt wird. Dieses erfinderische Verfahren beruht auf der Eigenschaft aller Gase, nicht nur eine bestimmte Masse pro Volumen zu haben, sondern auch eine flächenbezogene Nachgiebigkeit. Beide Größen werden durch das hier vorgestellte Messverfahren zugänglich. Dadurch besteht die Möglichkeit, neben der Betriebsdichte auch die Betriebsschallgeschwindigkeit zu erfassen. Hierbei wird nicht nur eine einzige Resonanzfrequenz ermittelt, sondern aufgrund der Geometrie der Kammern, des Schallwandlers und der Eigenschaften des gasförmigen Mediums ein ganzes Frequenzspektrum bestimmt und auf charakteristische Frequenzen untersucht. Anhand theoretischer Ableitungen lässt sich aus diesen charakteristischen Frequenzen und langzeitstabilen geometrischen Größen, die von der Gestaltung des Schallwandlers und seiner Umgebung abhängen und vorab sicher ermittelt werden können, eindeutig und mit überschaubarem Berechnungsaufwand die Betriebsdichte und/oder die Betriebsschallgeschwindigkeit des gasförmigen Mediums ermitteln. Die Erfassung erfolgt hierbei quasi im Echtzeitbetrieb, da die Schwingungsanregung und die Schwingungsantwort des Schallwandlers sich nach dem Überlagerungsprinzip quasi gleichzeitig vorgeben bzw. bestimmen lassen und damit die ermittelten Werte sehr zeitnah weiter verarbeitet werden können, was insbesondere bei zeitkritischen Regelungsprozessen von Vorteil sein kann. Der Schallwandler, die Kammern gleichen Volumens und der offene Kanal bilden dabei in etwa die Anordnung eines Helmholtz-Resonators. Anders als bei bekannten Auswerteverfahren mit einem ähnlichen Ansatz wird bei dem erfindungsgemäßen Verfahren ein kompletter Frequenzbereich ausgewertet und aus dem messbaren Verlauf der Impedanz innerhalb des Frequenzbereiches eine Mehrzahl von charakteristischen Frequenzen bestimmt, die wie sich analytisch zeigen lässt repräsentativ für die Betriebsdichte und die Betriebsschallgeschwindigkeit des gasförmigen Mediums sind und daher beide Größen bestimmbar machen. Hierbei ist es von Vorteil, dass die von der Dichte des gasförmigen Mediums beeinflusste mechanische Impedanz des schwingend erregten Schallwandlers zeitgleich als elektrische Impedanz des Schallwandlers ausgewertet wird. In der Praxis werden vorteilhaft drei charakteristische Frequenzen für die Bestimmung der Impedanz des Schallwandlers ermittelt, von denen eine der charakteristischen Frequenzen des Schallwandlers sich aus der Geometrie des Schallwandlers und weitere, vorteilhaft zwei weitere charakteristische Frequenzen sich aus der Wechselwirkung zwischen Schallwandler und gasförmigem Medium ergeben. Hierbei wird aus dem gemessenen Verlauf der Impedanz die jeweilige charakteristische Frequenz dadurch bestimmt, dass diese an Stellen des Frequenzganges auftritt, an denen der Imaginärteil der Impedanz zu Null wird. Damit ergibt sich ein eindeutiges und mathematisch einfach formuliertes Kriterium für die Ermittlung der charakteristischen Frequenzen anhand der gemessenen Impedanzen.

Vorteilhaft wird die Impedanzmessung durch eine Strommessung und eine Spannungsmessung an dem Schallwandler durchgeführt werden, die insbesondere nach dem Überlagerungsprinzip zeitgleich ausgeführt werden können. Bei der Strommessung wird der zeitveränderliche Strom erfasst, der zur Erregung der Schwingung auf den Schallwandler aufgeschaltet wird. Hierbei kann der zeitveränderliche Strom aus einem Frequenzspektrum gebildet werden, bestehend aus einem Strom mit Frequenzen gleicher Amplitude und unterschiedlicher Phasenlage, deren Verhältnis aus Effektivwert und Spitzenwert maximal ist. Bei der Spannungsmessung wird die zeitveränderliche Spannung erfasst, die als Reaktion auf die von dem gasförmigen Medium beeinflussten Schwingungen des Schallwandlers abgreifbar ist.

Von besonderem Vorteil ist es, dass die Auswertung der Strommessung und der Spannungsmessung analytisch durchgeführt werden kann, wobei besonders vorteilhaft die Auswertung der Strommessung und der Spannungsmessung mit Hilfe der Fast-Fourier-Transformation durchgeführt wird. Hierdurch ist für die Auswertung kein besonderer numerischer Aufwand nötig, sondern es kann durch geeignete Formulierung direkt aus den transformierten bzw. rücktransformierten Werten die jeweils gesuchte Größe bestimmt werden. Hierdurch wird der Berechnungsaufwand deutlich reduziert.

Es lässt sich zeigen, dass sich die Betriebsdichte $\rho_B$ besonders vorteilhaft berechnet aus

$$\rho_B := \frac{S_K \cdot m_M}{S_M^2 \cdot l_K} \cdot \left( \frac{f_3^2}{f_2^2} - 1 \right) \cdot \left( 1 - \frac{f_1^2}{f_2^2} \right),$$

wobei gilt

$S_M$ -     Flächengröße schwingungsfähiger Bereich des Schallwandlers
$m_M$ -     Masse des schwingungsfähigen Bereichs des Schallwandlers
$S_K$ -     Querschnittsfläche des Kanals zwischen den Kammern
$l_K$ -     Länge des Kanals zwischen den Kammern
$f_1, f_2, f_3$ -     ermittelte charakteristische Frequenzen.

Hierdurch kann aus fest vorgegebenen und im wesentlichen zeitinvariant bleibenden Größen des Schallwandlers sowie den bestimmten charakteristischen Frequenzen allein die Betriebsdichte $\rho_B$ bestimmt werden, so dass der Hauptaufwand der Berechnung in der Bestimmung der charakteristischen Frequenzen zu sehen ist. Ggf. treten zu den Einflussfaktoren auf die Betriebsdichte weitere Korrekturfaktoren hinzu, die sich beispielsweise aus der Geometrie des Messelementes sowie weiteren Einflussgrößen herleiten und z.B. zur Kalibration benötigt werden.

Analog gilt für die Berechnung der Betriebsschallgeschwindigkeit $c_B$, dass sich die Betriebsschallgeschwindigkeit $c_B$ berechnet aus

$$\mathbf{c_B = 2\pi \cdot f_2 \cdot \sqrt{\frac{V \cdot l_K}{2 \cdot S_K}}}$$

wobei gilt

$V$ -     Volumen der beiden Kammern
$S_K$ -     Querschnittsfläche des Kanals zwischen den Kammern
$l_K$ -     Länge des Kanals zwischen den Kammern
$f_2$ -     ermittelte charakteristische Frequenz.

Hierbei werden wiederum nur im wesentlichen zeitinvariant bleibende Größen des Schallwandlers sowie eine der charakteristischen Frequenzen benötigt. Betriebsdichte $\rho_B$ und Betriebsschallgeschwindigkeit $c_B$ können hierbei unabhängig voneinander bestimmt werden. Ggf. treten auch hier zu den Einflussfaktoren auf die Betriebsschallgeschwindigkeit weitere Korrekturfaktoren hinzu, die sich beispielsweise aus der Geometrie des Messelementes sowie weiteren Einflussgrößen herleiten und z.B. zur Kalibration benötigt werden.

Von Vorteil ist es weiterhin, wenn bei der Impedanzmessung Temperatur und Druck des gasförmigen Mediums innerhalb der Kammern bestimmt werden. Hierdurch kann in weiterer Ausgestaltung aus der Temperatur und dem Druck des gasförmigen Mediums innerhalb der Kammern anhand der Zustandsgleichung für ideale Gase aus der ermittelten Betriebsdichte und der Betriebsschallgeschwindigkeit die Normdichten und die Normschallgeschwindigkeit des gasförmigen Mediums berechnet werden. Damit lassen sich die unmittelbar ermittelten Werte für Betriebsdichte $\rho_B$ und Betriebsschallgeschwindigkeit $c_B$ umwerten in die entsprechenden Normgrößen, ohne dass hierfür wesentlicher Messaufwand getrieben werden müsste.

Von Vorteil ist es, wenn die Ermittlung der Impedanz des Schallwandlers in einer Auswerteeinheit durchgeführt wird, an die in weiterer Ausgestaltung die zeitveränderlichen Messwerte von Strom und Spannung des Schallwandlers über Digital-AnalogWandler bzw. Analog-Digital-Wandler übermittelt werden. In der Auswerteeinheit, die insbesondere für die Ausführung der entsprechenden Berechnungsverfahren ausgelegt werden kann, können somit alle notwendigen Berechnungen, Auswertungen und Protokollierungen zentral ausgeführt werden.

Hinsichtlich der Ausgestaltung einer Vorrichtung geht die Erfindung aus von einer Vorrichtung zur Messung von Betriebsdichte und/oder Betriebsschallgeschwindigkeit in einem gasförmigen Medium mit Hilfe eines schwingfähigen Schallwandlers, der in einem Gehäuse derart angeordnet ist, dass beidseitig des Schallwandlers Kammern gleichen Volumens gebildet sind, die von dem gasförmigen Medium ausgefüllt sind und das gasförmige Medium in den Kammern, gleichen Volumens beidseitig des Schallwandlers über einen offenen Kanal definierter Abmessungen miteinander in Verbindung steht, wobei auf den Schallwandler eine definierte Erregerschwingung aufbringbar ist, insbesondere zur Durchführung des Verfahrens gemäß Anspruch 1. Eine derartige Vorrichtung wird dadurch weiter gebildet, dass eine Messeinrichtung die Schwingungsantwort des Schallwandlers innerhalb eines festlegbaren Frequenzbereiches erfasst, die insbesondere von der Dichte des den Schallwandler umgebenden gasförmigen Mediums beeinflusst ist und der Impedanz des Schallwandlers in Abhängigkeit von der Erregerfrequenz entspricht, woraus eine Auswerteeinheit die Betriebsdichte und/oder die Betriebsschallgeschwindigkeit des gasförmigen Mediums anhand von mindestens drei charakteristischen Frequenzen des in dem gasförmigen Medium schwingenden Schallwandlers berechnet.

Von Vorteil bei der Ausgestaltung einer derartigen Vorrichtung ist es, wenn die Kammern gleich groß und symmetrisch ausgebildet sind und weitergehend die geometrischen Abmessungen der Kammern und/oder des offenen Kanals derart ausgebildet sind, dass sich für beide Kammern gleichartige Bedingungen für gasförmiges Medium und Schallwandler bilden. Damit bilden sich in den Kammern und für die Wechselwirkung des gasförmigen Mediums zwischen den Kammern und dem Schallwandler einfache geometrische und physikalische Verhältnisse aus, die eine Berechnung der charakteristischen Frequenzen und damit von Betriebsdichte und/oder die Betriebsschallgeschwindigkeit vereinfachen.

Hierbei kann in weiterer Ausgestaltung der offene Kanal in Form eines rohrförmigen Abschnittes ausgebildet ist, der beidseitig des Schallwandlers in die Kammern hinein ragt. Hierbei sollte bevorzugt der Querschnitt des offenen Kanals zur Reduzierung der mechanischen Verluste größer als ein Zehntel der schwingenden Fläche des Schallwandlers ausgebildet sein. Ebenfalls sollten die Zuleitungen für das gasförmige Medium zu den Kammern gleichen Volumens eine im Verhältnis zu ihrem Querschnitt große Länge aufweisen.

Für die Ausgestaltung des Schallwandlers ist es vorteilhaft, wenn der Schallwandler ein elektroakustischer Transducer ist, der beispielsweise als elektrostatischer Schallwandler, als piezoelektrischer Schallwandler auf Polymerbasis oder auch als elektrodynamischer Schallwandler ausgebildet werden kann.

Eine besonders bevorzugte Ausführungsform der erfindungsgemäßen Vorrichtung sowie der Überlegungen und Verhältnisse bei der Durchführung des erfindungsgemäßen Verfahrens zeigt die Zeichnung.

Es zeigen:

Figur 1 -   Prinzipieller Aufbau einer Messzelle der erfindungsgemäßen Vorrichtung,

Figur 2 -   vereinfachtes Ersatzschaltbild,

Figur 3 -   erweitertes Ersatzschaltbild,

Figur 4 -   Phasengang des Systems mit $L_0 = 0$ und $L_0 = 0,4$ mH,

Figur 5 -   Phasengänge des Systems mit herausgerechnetem $L_0$ bei Halbierung und Verdoppelung der Betriebsdichte gegenüber dem Normalzustand unter Annahme gleicher Schallgeschwindigkeiten,

Figur 6 - Phasengänge bei 0,71facher und 1,41facher Schallgeschwindigkeit unter Annahme gleicher Betriebsdichten,

Figur 7 - Blockschaltbild der Einrichtungskomponenten zur Bestimmung der Impedanz.

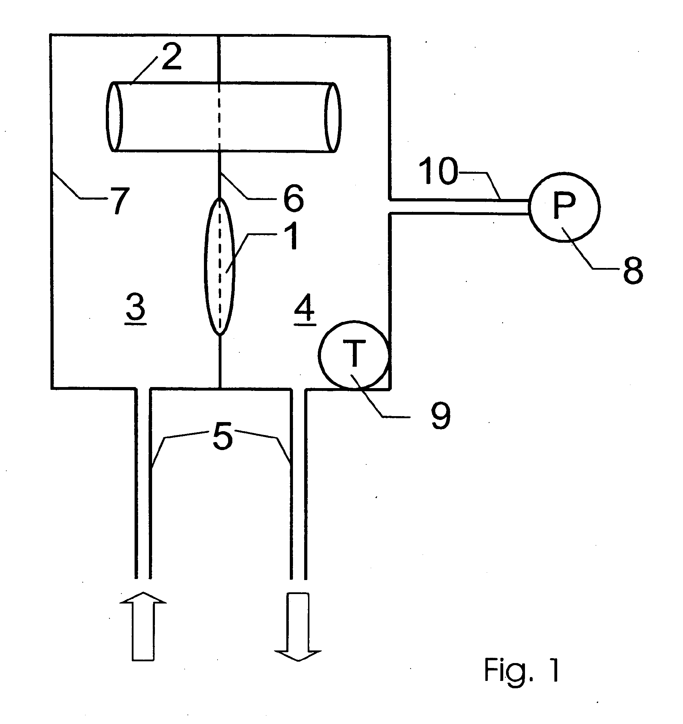

In der Figur 1 ist der prinzipielle Aufbau einer Messzelle der erfindungsgemäßen Vorrichtung dargestellt. Die Messzelle weist hierbei ein geschlossenes Gehäuse 7 auf, das durch eine Trennwand 6 in zwei gleich große Kammern 3, 4 eingeteilt ist. In die Trennwand 6 eingelassen sind ein von seinen Abmessungen wohl definierter offener Kanal 2 sowie ein Schallwandler 1. Das zu messende gasförmige Medium betritt und verlässt das Gehäuse 7 durch vergleichsweise dünne und lange Zuleitungsrohre 5. Durch Messung der elektrischen Impedanz des Schallwandlers 1 über der Frequenz sind nach nachfolgend ausführlich hergeleiteter Korrektion und Umrechnung neben der Betriebsdichte die Betriebsschallgeschwindigkeit sowie ggf. die dynamische Viskosität (nachfolgend aber nicht näher ausgeführt) ableitbar. Durch optionale zusätzliche Erfassung des Betriebsdruckes und der Betriebstemperatur mittels geeigneter Messaufnehmer 8, 9, wobei der Druckaufnehmer über eine Anschlussleitung 10 mit einer der Kammern 3, 4 in Verbindung steht, lassen sich nach Berechnung Normdichte und Normschallgeschwindigkeit ermitteln.

Im weiteren werden die zugrunde liegenden physikalischen Zusammenhänge zwischen Messgrößen und Zielgrößen des Verfahrens hergeleitet und erläutert.

Der Schallwandler 1 besitzt eine schwingungsfähige Membran mit einer effektiven Membranfläche $S_M$. Die Membran kann sich entweder kolbenförmig bewegen oder eine Biegeschwingung 1ter Ordnung ausführen. Unabhängig vom Bewegungsmodus der Membran wird diese zusätzlich durch ihre Masse $m_M$ sowie die wirkende Nachgiebigkeit $C_M$ beschrieben. Dadurch ergibt sich ein schwingfähiges System mit der Resonanzfrequenz $f_0$. Es gilt:

$$f_0 = \frac{1}{2\pi} \cdot \frac{1}{\sqrt{C_M m_M}} \qquad\qquad (G1)$$

Durch den Einbau des Schallwandlers 1 in das geschlossene Gehäuse 7 wird die Membran durch die gleich großen Volumina V der beiden Gehäusekammern 3, 4 belastet. Denkt man sich den offene Kanal 2 als nicht vorhanden, so wirken die beiden Volumina V als zusätzliche Nachgiebigkeiten $C_V$, die die Resonanzfrequenz der Membran erhöhen. Die Nachgiebigkeiten $C_V$ errechnen sich aus dem Volumen V, der Membranfläche $S_M$, dem Betriebsdruck $P_B$ sowie dem Adiabatenkoeffizienten $\kappa$ zu:

$$C_V = \frac{V}{\kappa \cdot P_B} \cdot \frac{1}{S_M^2} \qquad\qquad (G2)$$

Da die Nachgiebigkeiten $C_V$ auf beiden Seiten der Membran wirken, ergibt sich als Gesamtlast für die Membran $C_V/2$.

Nun kommt der offene Kanal 2 mit ins Spiel. Es lässt sich charakterisieren durch seine Länge $l_K$ sowie seinen Querschnitt $S_K$. Er bildet mit den Volumina V der beiden Gehäusekammern 3, 4 ebenfalls ein schwingfähiges System mit der Resonanzfrequenz $f_2$, die mit Berücksichtigung der Betriebsschallgeschwindigkeit $c_B$ folgendermaßen zu berechnen ist:

$$f_2 = \frac{c_B}{2\pi} \cdot \sqrt{\frac{2S_K}{V \cdot l_K}} \qquad\qquad (G3)$$

Die Betriebsschallgeschwindigkeit ist auch beschreibbar durch die Betriebsdichte $\rho_B$, den Betriebsdruck $P_B$ sowie den Adiabatenkoeffizienten $\kappa$ zu:

$$c_B = \sqrt{\frac{\kappa \cdot P_B}{\rho_B}} \qquad (G4)$$

Also lässt sich die Resonanzfrequenz $f_2$ auch so ausdrücken:

$$f_2 = \frac{1}{2\pi} \cdot \sqrt{\frac{2S_K \cdot \kappa \cdot P_B}{V \cdot l_K \cdot \rho_B}} \qquad (G5)$$

Betrachtet man nunmehr die auf die Membran wirkende Belastung, besteht diese nicht nur aus der Gesamtvolumennachgiebigkeit $C_V/2$, sondern aus einer zusätzlichen durch den Kommunikationskanal erzeugten Masse $m_K$. Sie lässt sich aus der Resonanzfrequenz $f_2$ errechnen, denn:

$$f_2 = \frac{1}{2\pi} \cdot \sqrt{\frac{2}{C_V \cdot m_K}} \qquad (G6)$$

Einsetzen von $C_V$ aus (G2) und Gleichsetzung mit (G5) liefert:

$$\frac{\kappa \cdot P_B \cdot S_M^2}{V \cdot m_K} = \frac{S_K \cdot \kappa \cdot P_B}{V \cdot l_K \cdot \rho_B} \Rightarrow m_K = S_M^2 \cdot \frac{l_K \cdot \rho_B}{S_K} \qquad (G7)$$

Betrachtet man den Schallwandler 1 als ideal, so lässt er sich mit seiner Wandlerkonstante W beschreiben, die die mechanischen komplexen Größen $v_M$ (Membrangeschwindigkeit) und $F_M$ (Membrankraft), die auf die Membran wirken, in die elektrischen komplexen Größen u (Spannung) und i (Strom) konvertiert und umgekehrt:

$$u = W \cdot v_M \quad \text{und} \quad i = \frac{F_M}{W} \qquad (G8)$$

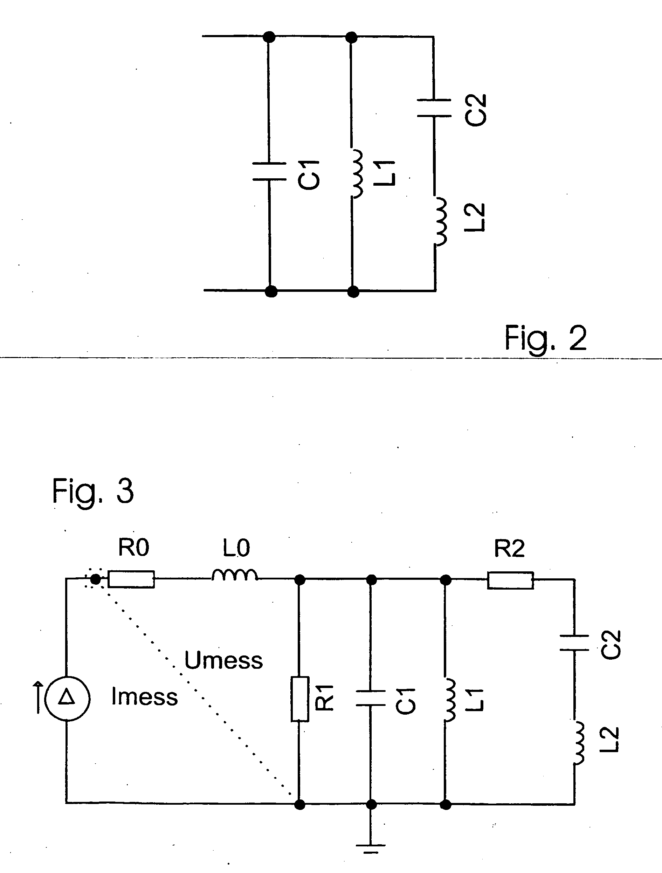

Damit stellt sich das elektrische Ersatzschaltbild gemäß Figur 2 darstellen:
Dabei sind

C1    das Äquivalent der Membranmasse,
L1    das Äquivalent der Membrannachgiebigkeit,
C2    das Äquivalent der Mediummasse im Kommunikationskanal,
L2    das Äquivalent der Nachgiebigkeit des Mediums in den Volumina.

Ausgehend vom Ersatzschaltbild ergibt sich die komplexe elektrische Impedanz Z zu

$$Z = \frac{j\omega L1 - j\omega^3 L1L2C2}{1 - \omega^2(L1C1 + L2C2 + L1C2) + \omega^4 L1C1L2C2} \qquad (G9)$$

Z weist drei charakteristische Kreisfrequenzen auf, bei denen der Imaginärteil verschwindet. Die Quadrate dieser Kreisfrequenzen lassen sich berechnen zu

EP 1 837 649 B1

$$\omega_1^2 = \frac{1}{2} \cdot \left( \frac{1}{L1C1} + \frac{1}{L2C2} + \frac{1}{L2C1} \right) - \sqrt{\frac{1}{4} \cdot \left( \frac{1}{L1C1} + \frac{1}{L2C2} + \frac{1}{L2C1} \right)^2 - \frac{1}{L1C1L2C2}} \quad (G10)$$

$$\omega_2^2 = \frac{1}{L2C2} \quad (G11)$$

$$\omega_3^2 = \frac{1}{2} \cdot \left( \frac{1}{L1C1} + \frac{1}{L2C2} + \frac{1}{L2C1} \right) + \sqrt{\frac{1}{4} \cdot \left( \frac{1}{L1C1} + \frac{1}{L2C2} + \frac{1}{L2C1} \right)^2 - \frac{1}{L1C1L2C2}} \quad (G12)$$

Daraus lässt sich ableiten:

$$\omega_1^2 \cdot \omega_3^2 = \frac{1}{L1C1L2C2} \Rightarrow \frac{1}{L1C1} = \frac{\omega_1^2 \cdot \omega_3^2}{\omega_2^2} \quad (G13)$$

$$\omega_1^2 + \omega_3^2 = \frac{1}{L1C1} + \frac{1}{L2C2} + \frac{1}{L2C1} \Rightarrow \frac{1}{L2C1} = \omega_1^2 + \omega_3^2 - \omega_2^2 - \frac{\omega_1^2 \cdot \omega_3^2}{\omega_2^2} \quad (G14)$$

Die einzige genau quantifizierbare und langzeitstabile Größe ist das Äquivalent der Membranmasse, so dass sich die anderen Reaktanzen auf C1 beziehen müssen, um zu einer analytischen Lösung zu gelangen:

$$L1 = \frac{1}{C1} \cdot \frac{\omega_2^2}{\omega_1^2 \cdot \omega_3^2} \quad (G15)$$

$$L2 = \frac{1}{C1} \cdot \frac{\omega_2^2}{\omega_1^2 \cdot \omega_2^2 + \omega_3^2 \cdot \omega_2^2 - \omega_2^4 - \omega_1^2 \cdot \omega_3^2} \quad (G16)$$

$$C2 = C1 \cdot \left( \frac{\omega_1^2}{\omega_2^2} + \frac{\omega_3^2}{\omega_2^2} - 1 - \frac{\omega_1^2 \cdot \omega_3^2}{\omega_2^4} \right) \quad (G17)$$

Somit sind alle Reaktanzen aus den drei charakteristischen Frequenzen ableitbar.
Nun werden die aus (G15) bis (G17) berechneten Größen auf die interessanten mechanischen Größen umgerechnet und die Kreisfrequenzen durch Frequenzen ersetzt:

$$C_M = \frac{1}{m_M} \cdot \frac{f_2^2}{f_1^2 \cdot f_3^2} \quad (G18)$$

7

$$C_V = \frac{2}{m_M} \cdot \frac{f_2^2}{f_1^2 \cdot f_2^2 + f_3^2 \cdot f_2^2 - f_2^4 - f_1^2 \cdot f_3^2} \qquad (G19)$$

$$m_K = m_M \cdot \left( \frac{f_1^2}{f_2^2} + \frac{f_3^2}{f_2^2} - 1 - \frac{f_1^2 \cdot f_3^2}{f_2^4} \right) \qquad (G20)$$

Aus (G20) und (G7) ergibt sich die Betriebsdichte $\rho_B$ zu:

$$\rho_B = \frac{S_K \cdot m_M}{S_M^2 \cdot l_K} \cdot \left( \frac{f_1^2}{f_2^2} + \frac{f_3^2}{f_2^2} - 1 - \frac{f_1^2 \cdot f_3^2}{f_2^4} \right) = \frac{S_K \cdot m_M}{S_M^2 \cdot l_K} \cdot \left( \frac{f_3^2}{f_2^2} - 1 \right) \cdot \left( 1 - \frac{f_1^2}{f_2^2} \right) \qquad (G21)$$

Aus (G3) folgt die Betriebsschallgeschwindigkeit $c_B$:

$$c_B = 2\pi \cdot f_2 \cdot \sqrt{\frac{V \cdot l_K}{2 \cdot S_K}} \qquad (G22)$$

Hier liegt der Vorteil der Vorrichtung und des Verfahrens: Nach Messung der drei charakteristischen Frequenzen $f_1$, $f_2$ und $f_3$ ergibt sich die Betriebsdichte $\rho_B$ aus den bekannten und langzeitstabilen geometrischen Größen $S_K$, $S_M$ und $l_K$ sowie der Membranmasse $m_M$ des Schallwandlers. Die Betriebsschallgeschwindigkeit $c_B$ fußt ebenfalls auf den langzeitstabilen geometrischen Größen V, $l_K$ und $S_K$.

Eine praktische Umsetzung der vorstehend ausgeführten theoretischen Zusammenhänge lässt sich etwa wie folgt vornehmen:

Eine vorteilhafte Versuchsanordnung zur Durchführung des Verfahrens besteht z.B. aus einem elektrodynamischen Lautsprecher mit einem Durchmesser von 45 mm als Schallwandler. Die idealisierten Vorgaben sind zu ergänzen um vier zusätzliche Kenngrößen, die der Schallwandler und das Gehäuse mitbringen. Es sind dies der Schwingspulenwiderstand $R_0$, die Schwingspuleninduktivität $L_0$, der mechanische Verlustwiderstand der Membraneinspannung $R_1$ (hier schon in den elektrischen Zweig transformiert) sowie der mechanische Strömungswiderstand $R_2$ im offene Kanal (ebenfalls transformiert). Mit einer Stromquelle als Signalgenerator und einer Spannungsmessung über den elektrischen Anschlüssen des Schallwandlers ergibt sich ein erweitertes Ersatzschaltbild gemäß Figur 3:

Durch Impedanzmessung des Lautsprechers ohne Gehäuse sowie in einem geschlossenen Gehäuse definierten Volumens lassen sich folgende konkrete mechanische und elektrische Größen ermitteln:

$$R_0 = 47\ \Omega,\ R_1 = 100\ \Omega,\ f_0 = 485\ Hz,\ C_M = 2{,}2E\text{-}4\ m/N,\ m_M = 5{,}0E\text{-}4\ kg,$$

$$C_1 = 40\ uF,\ L_0 = 0{,}4\ mH,\ L_1 = 2{,}7\ mH.$$

Die Auslegung der Kammervolumina sowie des offenen Kanals erfolgt derart, dass sich unter den erwarteten Betriebsbedingungen $C_1 = C_2$ sowie $L_1 = L_2$ ergibt. Der Querschnitt des offene Kanals sollte größer als ein Zehntel der Membranfläche sein, um die mechanischen Verluste klein zu halten ($R_2$ möglichst klein).

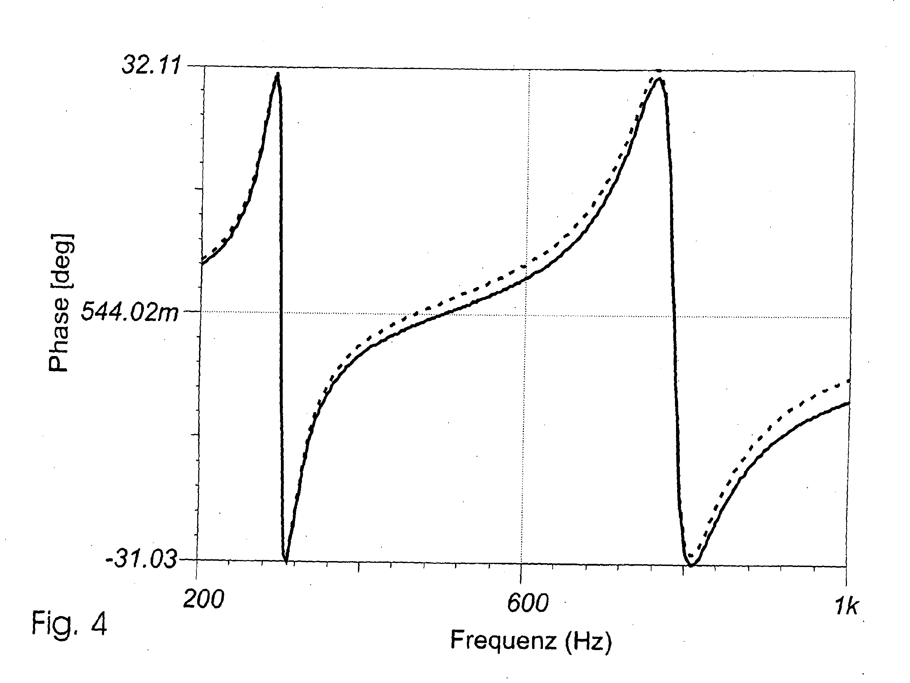

Da die drei charakteristischen Frequenzen an Stellen auftreten, an denen der Imaginärteil der Impedanz verschwindet, stellt sich als kritische Beeinflussungsgröße die Schwingspulenimpedanz $L_0$ heraus. Das Diagramm gemäß Figur 4 zeigt den Phasengang des Systems mit $L_0 = 0$ und $L_0 = 0{,}4$ mH:

Zu erkennen sind die unterschiedlichen Nulldurchgänge der Phasen bei der Frequenz $f_2$: Mit $L_0 = 0{,}4$ mH verschiebt sich der Nulldurchgang hin zu kleinerer Frequenz. Somit muss $L_0$ herausgerechnet werden. Die Frequenzen

$f_1$ und $f_3$ sind kaum betroffen.

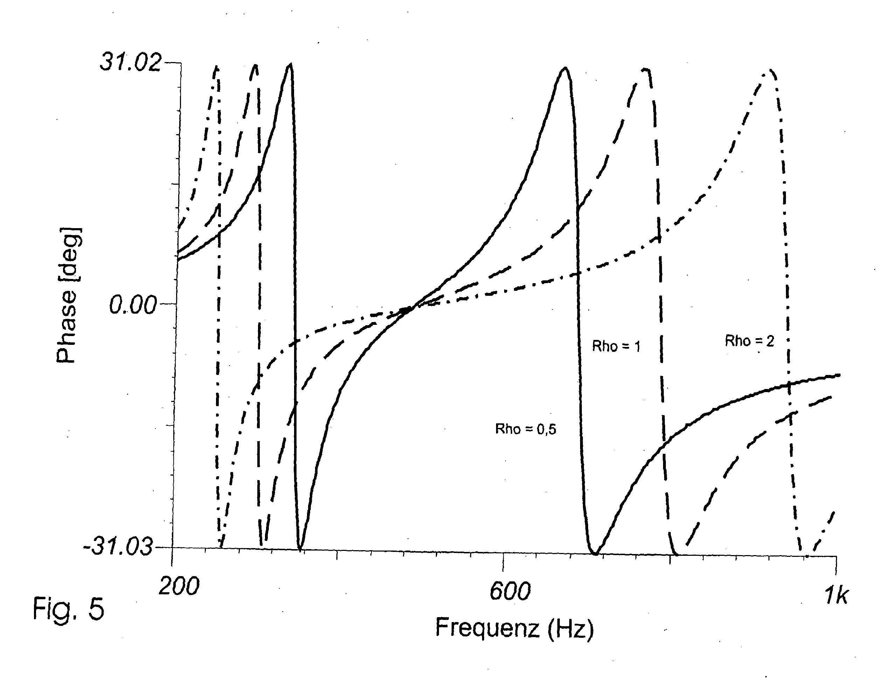

Figur 5 zeigt die Phasengänge mit herausgerechnetem $L_0$ bei Halbierung und Verdoppelung der Betriebsdichte gegenüber dem Normalzustand unter Annahme gleicher Schallgeschwindigkeiten.

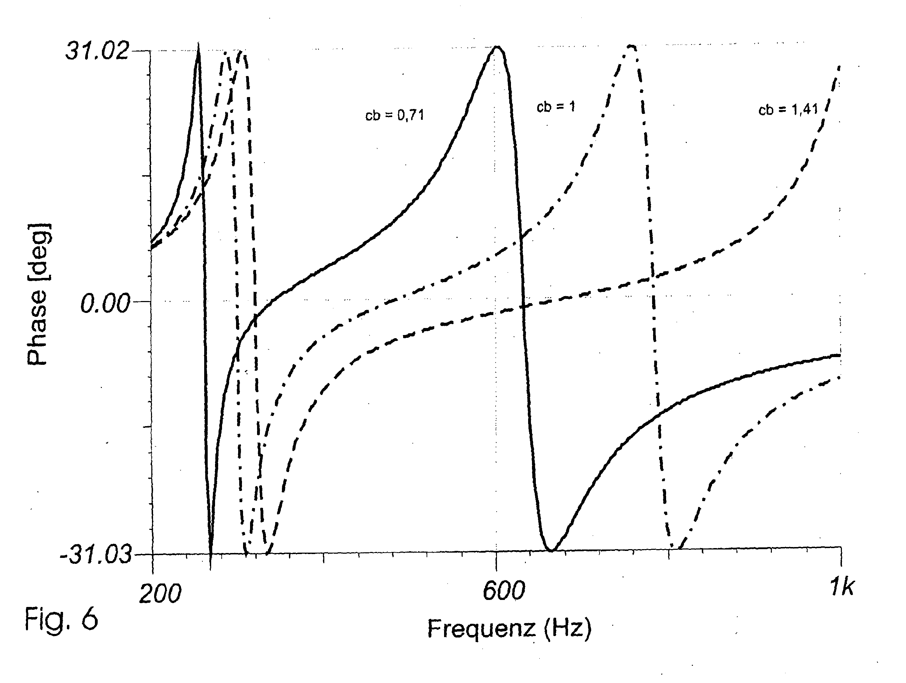

Figur 6 zeigt die Phasengänge bei 0,71facher und 1,41facher Schallgeschwindigkeit unter Annahme gleicher Betriebsdichten.

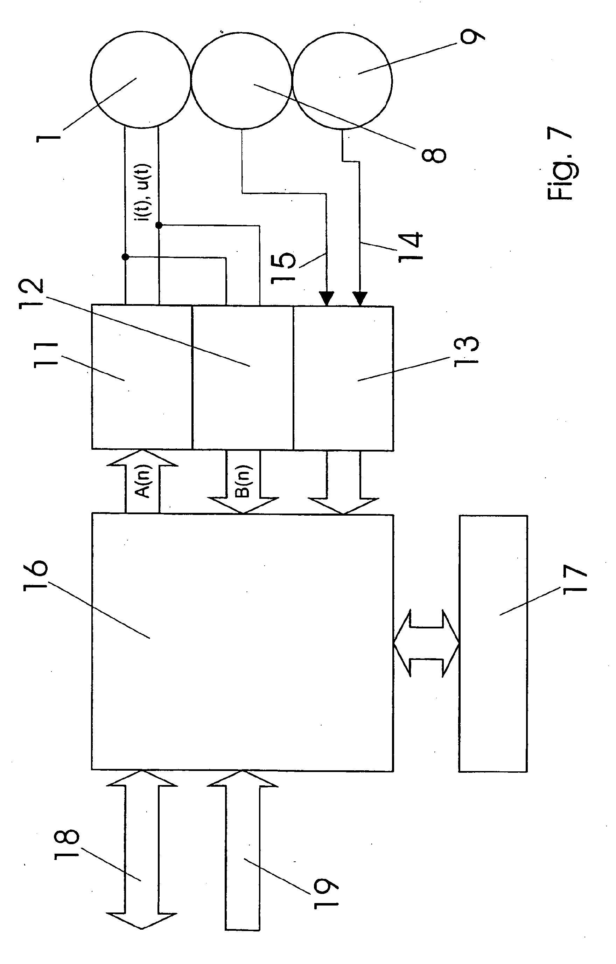

Ein vorteilhaftes Verfahren zur Impedanzmessung könnte gemäß Figur 7 etwa wie folgt durchgeführt werden:

Die Ermittlung der Impedanz des Schallwandlers 1 geschieht über eine Auswerteeinheit und erfolgt durch Erregung des Schallwandlers 1 mit einem wohldefinierten Stromsignal $i_{(t)}$ und Erfassung der sich über dem Schallwandler 1 ergebenden Spannung $u_{(t)}$. Dazu ist in der Figur 7 ein Blockschaltbild angegeben:

Das Stromsignal i(t) wird über einen Digital-Analog-Wandler 11 generiert. Dazu wird dem D/A-Wandler 11 eine aus N Digitalwerten bestehende Ausgabesequenz A periodisch zugeführt. Die einzelnen ausgegebenen Digitalwerte A(n) haben den äquidistanten zeitlichen Abstand $t_s$, so dass sich die Ausgabesequenz nach $t_p$ wiederholt. Für die Länge N der Ausgabesequenz A gilt:

$$N = \frac{t_p}{t_s} = 2^M \qquad \text{mit M als positiver ganzer Zahl} \qquad (G23)$$

Die einzelnen Ausgabewerte A(n) der Ausgabesequenz A genügen der Berechnungsformel:

$$A(n) = A_0 \cdot \sum_{k=1}^{\frac{N}{2}-1} \cos\left(2 \cdot \pi \cdot \frac{k \cdot n - k^2}{N}\right) \qquad \text{mit} \quad 0 \leq n \leq N\text{-}1 \qquad (G24)$$

Anschaulich dargestellt besteht die Ausgabesequenz A(n) und somit das Stromsignal i(t) aus einem Frequenzspektrum, gebildet von diskreten Frequenzen gleicher Amplitude und optimal verteilter unterschiedlicher Phasenlage. Die kleinste vorkommende Frequenz, identisch mit dem Abstand der diskreten Frequenzen voneinander, ist $f_p = 1/t_p$. Die höchste vorkommende Frequenz ist $f_s/2 - f_p$ mit $f_s = 1/t_s$. Die unterschiedliche Phasenlage der einzelnen Frequenzen zueinander ist in dem Sinne optimal, dass das Verhältnis aus Effektivwert und Spitzenwert des Stromsignals maximal ist.

Aufgrund der oben angeführten Beschaffenheit des Stromsignals i(t) liefert die Anwendung einer schnellen Fourier-Transformation (FFT) ohne Fensterung auf die N Ausgabewerte der Ausgabesequenz A die verlustfreie Repräsentation des komplexen Frequenzspektrums I(f).

Die Erfassung der sich über dem Schallwandler 1 ergebenden Spannung u(t) erfolgt mithilfe eines Analog-Digital-Wandlers 12. Die Zeit zwischen den Abtastungen beträgt $t_s$. N Abtastwerte liefern die Eingabesequenz B und bilden damit u(t) nach.

Durch Anwendung der FFT auf die Eingabesequenz B erhält man das komplexe Frequenzspektrum U(f). Somit ist die komplexe Impedanz des Schallwandlers Z(f) durch diskrete komplexe Division von U(f) durch I(f) zu ermitteln.

Es erfolgt danach die Subtraktion der Impedanz von $L_0$ und das Suchen der drei charakteristischen Frequenzen $f_1$ bis $f_3$ in der Auswerteeinheit 16. Diese liegen in denjenigen Intervallen, in denen ein Vorzeichenwechsel des Imaginärteils stattgefunden hat. Durch Interpolation in den Umgebungen dieser Intervalle kann man die Nulldurchgänge exakt feststellen.

Für die weiter oben angeführte praktische Realisierung ist eine Signalabtastrate $f_s$ von mindestens 3000 Hz notwendig. Eine genügend genaue Auflösung des Phasengangs setzt einen Abstand der einzelnen Frequenzlinien von kleiner als 2 Hz voraus. Daraus ergibt sich M = 11 und somit N = 2048. Somit sind die Schallgeschwindigkeit und die Dichte etwa 1,5mal pro Sekunde messbar. Durch Mittelung über mehrere Messungen kann die Streuung verringert werden.

Eine Erweiterung des Verfahrens kann dadurch erfolgen, dass die ermittelten Werte für Betriebsdichte und Betriebsschallgeschwindigkeit auf die Normwerte wie nachfolgend dargestellt umgewertet werden.

Aus der Betriebsschallgeschwindigkeit $c_B$ und der Betriebsdichte $\rho_B$ kann durch zusätzliche Messung des Betriebdrucks $P_B$ und der Betriebstemperatur $T_B$ mittels zweier Aufnehmer 8, 9, die in die Kammern 3, 4 eingebracht werden, durch Anwendung der Zustandsgleichung für ideale Gase die Normdichte $\rho_n$ und die Normschallgeschwindigkeit $c_n$ berechnet werden. $P_n$ und $T_n$ legen dabei den Normzustand fest. Solange $T_B$ und $T_n$ sowie $P_B$ und $P_n$ nicht mehr als 20% auseinanderliegen, ist der Fehler durch das Realgasverhalten kleiner als 0,1 %.

Es gilt:

$$\rho_n = \rho_B \cdot \frac{T_B \cdot P_n}{T_n \cdot P_B} \tag{G25}$$

$$c_n = c_B \cdot \sqrt{\frac{T_B}{T_n}} \tag{G26}$$

Die Datenerfassung in der Auswerteeinheit 16 der vom Druck- und Temperaturaufnehmer 8, 9 generierten elektrischen Signale 14, 15 geschieht mittels A/D-Wandlung in einem doppelten Wandlerbaustein 13 und damit stehen der Auswerteeinheit 16 die Messwerte digital zur Verfügung.

Zur Bedienung der Auswerteeinheit 16 steht eine optionale Bedieneinheit 17 sowie zur Anbindung an die Stromversorgung eine Versorgungseinheit 19 und eine Kommunikationseinheit 18 zur Weiterleitung der ermittelten Werte zur Verfügung.

**Sachnummernliste**

1 - Schallwandler
2 - offener Kanal
3 - Kammer
4 - Kammer
5 - Zuleitungen
6 - Trennwand
7 - Gehäuse
8 - Druckaufnehmer
9 - Temperaturaufnehmer
10 - Anschlussleitung Druckaufnehmer
11 - D/A-Wandler
12 - A/D-Wandler
13 - A/D-Wandler
14 - Temperatursignal
15 - Drucksignal
16 - Auswerteeinheit
17 - Bedieneinheit
18 - Kommunikationseinheit
19 - Versorgungseinheit

**Patentansprüche**

**1.** Verfahren zur Messung von Betriebsdichte und/oder Betriebsschallgeschwindigkeit in einem gasförmigen Medium mit Hilfe eines schwingfähigen Schallwandlers (1), der in einem Gehäuse (7) derart angeordnet ist, dass beidseitig des Schallwandlers (1) Kammern (3, 4) gleichen Volumens gebildet sind, die von dem gasförmigen Medium ausgefüllt sind, und das gasförmige Medium in den Kammern (3, 4) gleichen Volumens über einen offenen Kanal (2) definierter Abmessungen miteinander in Verbindung steht,
**dadurch gekennzeichnet, dass**
anhand einer auf den Schallwandler (1) aufgebrachten Erregerschwingung die von der Dichte des gasförmigen Mediums beeinflusste Impedanz des Schallwandlers (1) in Abhängigkeit von der Erregerfrequenz innerhalb eines festlegbaren Frequenzbereiches bestimmt wird und daraus die Betriebsdichte und/oder die Betriebsschallgeschwindigkeit des gasförmigen Mediums anhand von mindestens drei charakteristischen Frequenzen des in dem gasför-

migem Medium schwingenden Schallwandlers (1) ermittelt wird.

2. Verfahren gemäß Anspruch 1, **dadurch gekennzeichnet, dass** die von der Dichte des gasförmigen Mediums beeinflusste mechanische Impedanz des schwingend erregten Schallwandlers (1) zeitgleich als elektrische Impedanz des Schallwandlers (1) ausgewertet wird.

3. Verfahren gemäß einem der Ansprüche 1 oder 2, **dadurch gekennzeichnet, dass** eine der charakteristischen Frequenzen des Schallwandlers (1) aus der Geometrie des Schallwandlers (1) und weitere charakteristische Frequenzen aus der Wechselwirkung zwischen Schallwandler (1) und gasförmigem Medium bestimmt werden.

4. Verfahren gemäß Anspruch 3, **dadurch gekennzeichnet, dass** drei charakteristische Frequenzen für die Bestimmung der Impedanz des Schallwandlers (1) bestimmt werden.

5. Verfahren gemäß einem der Ansprüche 3 oder 4, **dadurch gekennzeichnet, dass** die charakteristischen Frequenzen an Stellen des Frequenzganges auftreten, an denen der Imaginärteil der Impedanz zu Null wird.

6. Verfahren gemäß einem der vorstehenden Ansprüche, **dadurch gekennzeichnet, dass** die Impedanzmessung durch eine Strommessung und eine Spannungsmessung an dem Schallwandler (1) durchgeführt wird.

7. Verfahren gemäß Anspruch 6, **dadurch gekennzeichnet, dass** die Strommessung und die Spannungsmessung nach dem Überlagerungsprinzip zeitgleich ausgeführt werden.

8. Verfahren gemäß einem der Ansprüche 6 oder 7, **dadurch gekennzeichnet, dass** die Strommessung den zeitveränderlichen Strom erfasst, der zur Erregung der Schwingung auf den Schallwandler (1) aufgeschaltet wird.

9. Verfahren gemäß Anspruch 8, **dadurch gekennzeichnet, dass** der zeitveränderliche Strom aus einem Frequenzspektrum gebildet wird aus einem Strom mit Frequenzen gleicher Amplitude und unterschiedlicher Phasenlage, deren Verhältnis aus Effektivwert und Spitzenwert maximal ist.

10. Verfahren gemäß einem der Ansprüche 6 oder 7, **dadurch gekennzeichnet, dass** die Spannungsmessung die zeitveränderliche Spannung erfasst, die als Reaktion auf die von dem gasförmigen Medium beeinflussten Schwingungen des Schallwandlers (1) abgreifbar ist.

11. Verfahren gemäß einem der Ansprüche 6 bis 10, **dadurch gekennzeichnet, dass** die Auswertung der Strommessung und der Spannungsmessung analytisch durchgeführt wird.

12. Verfahren gemäß Anspruch 11, **dadurch gekennzeichnet, dass** die Auswertung der Strommessung und der Spannungsmessung mit Hilfe der Fast-Fourier-Transformation durchgeführt wird.

13. Verfahren gemäß einem der vorstehenden Ansprüche, **dadurch gekennzeichnet, dass** die Betriebsdichte $\rho_B$ sich berechnet aus

$$\rho_B = \frac{S_K \cdot m_M}{S_M^2 \cdot l_K} \cdot \left( \frac{f_3^2}{f_2^2} - 1 \right) \cdot \left( 1 - \frac{f_1^2}{f_2^2} \right),$$

wobei gilt

$S_M$ - Fläche schwingungsfähiger Bereich des Schallwandlers (1)
$m_M$ - Masse schwingungsfähiger Bereich des Schallwandlers (1)
$S_K$ - Querschnittsfläche des Kanals (2) zwischen den Kammern (3, 4)
$l_K$ - Länge des Kanals (2) zwischen den Kammern (3, 4)
$f_1, f_2, f_3$ - ermittelte charakteristische Frequenzen.

14. Verfahren gemäß einem der vorstehenden Ansprüche, **dadurch gekennzeichnet, dass** die Betriebsschallgeschwindigkeit $c_B$ sich berechnet aus

$$c_B = 2\pi \cdot f_2 \cdot \sqrt{\frac{V \cdot l_K}{2 \cdot S_K}}$$

wobei gilt

V - Volumen der beiden Kammern (3, 4)
$S_K$ - Querschnittsfläche des Kanals (2) zwischen den Kammern (3, 4)
$l_K$ - Länge des Kanals (2) zwischen den Kammern (3, 4)
$f_2$ - ermittelte charakteristische Frequenz.

15. Verfahren gemäß einem der vorstehenden Ansprüche, **dadurch gekennzeichnet, dass** bei der Impedanzmessung Temperatur und Druck des gasförmigen Mediums innerhalb der Kammern (3, 4) bestimmt wird.

16. Verfahren gemäß Anspruch 15, **dadurch gekennzeichnet, dass** aus der Temperatur und dem Druck des gasförmigen Mediums innerhalb der Kammern (3, 4) anhand der Zustandsgleichung für ideale Gase aus der ermittelten Betriebsdichte und der Betriebsschallgeschwindigkeit die Normdichten und die Normschallgeschwindigkeit des gasförmigen Mediums berechnet werden.

17. Verfahren gemäß einem der vorstehenden Ansprüche, **dadurch gekennzeichnet, dass** die Ermittlung der Impedanz des Schallwandlers (1) in einer Auswerteeinheit (16) durchgeführt wird.

18. Verfahren gemäß Anspruch 17, **dadurch gekennzeichnet, dass** die zeitveränderlichen Messwerte von Strom und Spannung des Schallwandlers über DigitalAnalog-Wandler (11) bzw. Analog-Digital-Wandler (12) an die Auswerteeinheit (16) übermittelt werden.

19. Verfahren gemäß einem der vorstehenden Ansprüche, **dadurch gekennzeichnet, dass** der Schallwandler (1) als elektroakustischer Transducer arbeitet.

20. Verfahren gemäß einem der vorstehenden Ansprüche, **dadurch gekennzeichnet, dass** die dynamische Viskosität des gasförmigen Mediums bestimmt wird.

21. Verfahren gemäß einem der vorstehenden Ansprüche, **dadurch gekennzeichnet, dass** in die Berechnung der Impedanz schallwandlerspezifische Größen einbezogen werden.

22. Vorrichtung zur Messung von Betriebsdichte und/oder Betriebsschallgeschwindigkeit in einem gasförmigen Medium mit Hilfe eines schwingfähigen Schallwandlers (1), der in einem Gehäuse (7) derart angeordnet ist, dass beidseitig des Schallwandlers (1) Kammern (3, 4) gleichen Volumens gebildet sind, die von dem gasförmigen Medium ausgefüllt sind, das gasförmige Medium in den Kammern (3, 4) gleichen Volumens beidseitig des Schallwandlers (1) über einen offenen Kanal (2) definierter Abmessungen miteinander in Verbindung steht und auf den Schallwandler (1) eine definierte Erregerschwingung aufbringbar ist, insbesondere zur Durchführung des Verfahrens gemäß Anspruch 1,
**dadurch gekennzeichnet, dass**
eine Messeinrichtung die Schwingungsantwort des Schallwandlers (1) innerhalb eines festlegbaren Frequenzbereiches erfasst, die insbesondere von der Dichte des den Schallwandler (1) umgebenden gasförmigen Mediums beeinflusst ist und der Impedanz des Schallwandlers (1) in Abhängigkeit von der Erregerfrequenz entspricht, woraus eine Auswerteeinheit (16) die Betriebsdichte und/oder die Betriebsschallgeschwindigkeit des gasförmigen Mediums anhand von mindestens drei charakteristischen Frequenzen des in dem gasförmigen Medium schwingenden Schallwandlers (1) berechnet.

23. Vorrichtung gemäß Anspruch 22, **dadurch gekennzeichnet, dass** die Kammern (3, 4) gleich groß und symmetrisch ausgebildet sind.

24. Vorrichtung gemäß Anspruch 22, **dadurch gekennzeichnet, dass** die geometrischen Abmessungen der Kammern (3, 4) und/oder des offenen Kanals (2) derart ausgebildet sind, dass sich für beide Kammern (3, 4) gleichartige Bedingungen für gasförmiges Medium und Schallwandler (1) bilden.

**25.** Vorrichtung gemäß Anspruch 22, **dadurch gekennzeichnet, dass** der offene Kanal (2) in Form eines rohrförmigen Abschnittes ausgebildet ist, der beidseitig des Schallwandlers (1) in die Kammern (3, 4) hinein ragt.

**26.** Vorrichtung gemäß einem der Ansprüche 22 bis 25, **dadurch gekennzeichnet, dass** die Zuleitungen (5) für das gasförmige Medium zu den Kammern (3, 4) gleichen Volumens eine im Verhältnis zu ihrem Querschnitt große Länge aufweisen.

**27.** Vorrichtung gemäß einem der Ansprüche 22 bis 26, **dadurch gekennzeichnet, dass** der Schallwandler (1) ein elektroakustischer Transducer ist.

**28.** Vorrichtung gemäß Anspruch 27, **dadurch gekennzeichnet, dass** der Schallwandler (1) ein elektrostatischer Schallwandler (1) ist.

**29.** Vorrichtung gemäß Anspruch 27, **dadurch gekennzeichnet, dass** der Schallwandler (1) ein piezoelektrischer Schallwandler (1) auf Polymerbasis ist.

**30.** Vorrichtung gemäß Anspruch 27, **dadurch gekennzeichnet, dass** der Schallwandler (1) ein elektrodynamischer Schallwandler (1) ist.

**31.** Vorrichtung gemäß einem der Ansprüche 22 bis 30, **dadurch gekennzeichnet, dass** zur Bestimmung der Impedanz in der Auswerteeinheit (16) die an dem Schallwandler (1) analog erfassten Messgrößen über Wandlerbausteine (12) digitalisiert der Auswerteeinheit (16) zuführbar sind.

**32.** Vorrichtung gemäß Anspruch 31, **dadurch gekennzeichnet, dass** die Digitalisierung der Messgrößen in den Wandlerbausteinen (12) mit einer Abtastrate von mindestens 3000 Hz durchführbar ist.

**33.** Vorrichtung gemäß einem der Ansprüche 22 bis 32, **dadurch gekennzeichnet, dass** die Auswerteeinheit (16) zur Echtzeit-Durchführung von Fast-Fourier-Transformationen ausgebildet ist.

**34.** Vorrichtung gemäß einem der Ansprüche 22 bis 33, **dadurch gekennzeichnet, dass** der Auswerteeinheit (16) Messwerte (14, 15) über die Temperatur und den Druck in den Kammern (3, 4) zuführbar sind.

**35.** Vorrichtung gemäß einem der Ansprüche 22 bis 34, **dadurch gekennzeichnet, dass** der Querschnitt des offenen Kanals (2) zur Reduzierung der mechanischen Verluste größer als ein Zehntel der schwingenden Fläche des Schallwandlers (1) ausgebildet ist.

**Claims**

**1.** A method of measuring operational density and/or operational sound speed in a gaseous medium by means of a sound transducer (1) which is capable of vibration and which is arranged in a housing (7) in such a way that formed on both sides of the sound transducer (1) are chambers (3, 4) of the same volume which are filled by the gaseous medium and the gaseous medium in the chambers (3, 4) of the same volume are in communication with each other by way of an open passage (2) of defined dimensions,
**characterised in that**
the impedance of the sound transducer (1), that is influenced by the density of the gaseous medium, is determined on the basis of an exciter vibration applied to the sound transducer (1), in dependence on the exciter frequency within a frequency range which can be established and the operational density and/or the operational sound speed of the gaseous medium is ascertained therefrom on the basis of at least three characteristic frequencies of the sound transducer (1) which vibrates in the gaseous medium.

**2.** A method according to claim 1 **characterised in that** the mechanical impedance of the vibratingly excited sound transducer (1), that is influenced by the density of the gaseous medium, is evaluated at the same time as an electrical impedance of the sound transducer (1).

**3.** A method according to one of claims 1 and 2 **characterised in that** one of the characteristic frequencies of the sound transducer (1) is determined from the geometry of the sound transducer (1) and further characteristic frequencies are determined from the interaction between the sound transducer (1) and the gaseous medium.

**4.** A method according to claim 3 **characterised in that** three characteristic frequencies are determined for determining the impedance of the sound transducer (1).

**5.** A method according to one of claims 3 and 4 **characterised in that** the characteristic frequencies occur at locations of the frequency response, at which the imaginary part of the impedance becomes zero.

**6.** A method according to one of the preceding claims **characterised in that** impedance measurement is carried out by means of a current measurement and a voltage measurement at the sound transducer (1).

**7.** A method according to claim 6 **characterised in that** the current measurement and the voltage measurement are performed at the same time on the basis if the superimposition principle.

**8.** A method according to one of claims 6 and 7 **characterised in that** the current measurement detects the time-variable current which is applied to the sound transducer (1) for exciting the vibration.

**9.** A method according to claim 8 **characterised in that** the time-variable current is formed from a frequency spectrum comprising a current with frequencies of the same amplitude and differing phase position, whose ratio of effective value and peak value is at a maximum.

**10.** A method according to one of claims 6 and 7 **characterised in that** the voltage measurement detects the time-variable voltage which can be taken off as a reaction to the vibrations of the sound transducer (1), that are influenced by the gaseous medium.

**11.** A method according to one of claims 6 to 10 **characterised in that** evaluation of the current measurement and the voltage measurement is effected analytically.

**12.** A method according to claim 11 **characterised in that** the evaluation of the current measurement and the voltage measurement is carried out by means of Fast Fourier transform.

**13.** A method according to one of the preceding claims **characterised in that** the operational density $\rho_B$ is calculated from:

$$\rho_B = \frac{S_K \cdot m_M}{S_M^2 \cdot l_K} \cdot \left( \frac{f_3^2}{f_2^2} - 1 \right) \cdot \left( 1 - \frac{f_1^2}{f_2^2} \right),$$

wherein
$S_M$ is the area of a vibratary region of the sound transducer (1),
$m_M$ is the mass of a vibratary region of the sound transducer (1),
$S_K$ is the cross-sectional area of the passage (2) between the chambers (3, 4),
$l_K$ is the length of the passage (2) between the chambers (3, 4), and $f_1, f_2, f_3$ are ascertained characteristic frequencies.

**14.** A method according to one of the preceding claims **characterised in that** the operational sound speed $c_B$ is calculated from:

$$c_B = 2\pi \cdot f_2 \cdot \sqrt{\frac{V \cdot l_K}{2 \cdot S_K}}$$

wherein
V is the volume of the two chambers (3, 4),
$S_K$ is the cross-sectional area of the passage (2) between the chambers (3, 4),
$l_K$ is the length of the passage (2) between the chambers (3, 4), and $f_2$ is the ascertained characteristic frequency.

**15.** A method according to one of the preceding claims **characterised in that** in impedance measurement the temperature and the pressure of the gaseous medium within the chambers (3, 4) is determined.

**16.** A method according to claim 15 **characterised in that** the standard densities and the standard sound speed of the gaseous medium are calculated from the temperature and the pressure of the gaseous medium within the chambers (3, 4) on the basis of the status equation for ideal gases from the ascertained operational density and the operational sound speed.

**17.** A method according to one of the preceding claims **characterised in that** the operation of ascertaining the impedance of the sound transducer (1) is carried out in an evaluation unit (16).

**18.** A method according to claim 17 **characterised in that** the time-variable measurement values of current and voltage of the sound transducer are communicated to the evaluation unit (16) by way of a digital/analog converter (11) or an analog/digital converter (12) respectively.

**19.** A method according to one of the preceding claims **characterised in that** the sound transducer (1) operates as an electroacoustic transducer.

**20.** A method according to one of the preceding claims **characterised in that** the dynamic viscosity of the gaseous medium is determined.

**21.** A method according to one of the preceding claims **characterised in that** sound transducer-specific parameters are incorporated into calculation of the impedance.

**22.** Apparatus for measuring operational density and/or operational sound speed in a gaseous medium by means of a sound transducer (1) which is capable of vibration and which is arranged in a housing (7) in such a way that formed on both sides of the sound transducer (1) are chambers (3, 4) of the same volume which are filled by the gaseous medium, the gaseous medium in the chambers (3, 4) of the same volume on both sides of the sound transducer (1) is in communication with each other by way of an open passage (2) of defined dimensions, and a defined exciter vibration can be applied to the sound transducer (1), in particular for carrying out the method according to claim 1, **characterised in that**
a measuring device detects the vibration response of the sound transducer (1) within a frequency range that can be established, which is influenced in particular by the density of the gaseous medium surrounding the sound transducer (1) and corresponds to the impedance of the sound transducer (1) in dependence on the exciter frequency, from which an evaluation unit (16) calculates the operational density and/or the operational sound speed of the gaseous medium on the basis of at least three characteristic frequencies of the sound transducer (1) which vibrates in the gaseous medium.

**23.** Apparatus according to claim 22 **characterised in that** the chambers (3, 4) are of the same size and are symmetrical.

**24.** Apparatus according to claim 22 **characterised in that** the geometrical dimensions of the chambers (3, 4) and/or the open passage (2) are such that similar conditions for gaseous medium and sound transducer (1) are formed for both chambers (3, 4).

**25.** Apparatus according to claim 22 **characterised in that** the open passage (2) is in the form of a tubular portion which projects on both sides of the sound transducer (1) into the chambers (3, 4).

**26.** Apparatus according to one of claims 22 to 25 **characterised in that** the feed lines (5) for the gaseous medium to the chambers (3, 4) of the same volume are of a length which is large in relation to their cross-section.

**27.** Apparatus according to one of claims 22 to 26 **characterised in that** the sound transducer (1) is an electroacoustic transducer.

**28.** Apparatus according to claim 27 **characterised in that** the sound transducer (1) is an electrostatic sound transducer (1).

**29.** Apparatus according to claim 27 **characterised in that** the sound transducer (1) is a polymer-based piezoelectric sound transducer (1).

**30.** Apparatus according to claim 27 **characterised in that** the sound transducer (1) is an electrodynamic sound transducer (1).

**31.** Apparatus according to one of claims 22 to 30 **characterised in that** to determine the impedance in the evaluation unit (16) the measurement values detected in analog form at the sound transducer (1) can be fed in digitised form by way of converter components (12) to the evaluation unit (16).

**32.** Apparatus according to claim 31 **characterised in that** digitisation of the measurement values in the converter components (12) can be performed at a sampling rate of at least 3000 Hz.

**33.** Apparatus according to one of claims 22 to 32 **characterised in that** the evaluation unit (16) is adapted for real-time implementation of Fast Fourier transforms.

**34.** Apparatus according to one of claims 22 to 33 **characterised in that** measurement values (14, 15) relating to the temperature and the pressure in the chambers (3, 4) can be fed to the evaluation unit (16).

**35.** Apparatus according to one of claims 22 to 34 **characterised in that** the cross-section of the open passage (2) is larger than a tenth of the vibrating surface of the sound transducer (1) to reduce the mechanical losses.


**Revendications**

**1.** Procédé de mesure de la densité nominale et/ou de la vitesse du son nominale dans un milieu gazeux à l'aide d'un transducteur acoustique pouvant osciller (1) qui est disposé dans un boîtier (7) de manière telle que soient formées des deux côtés du transducteur acoustique (1) des chambres (3, 4) ayant un volume identique qui sont remplies du milieu gazeux, et que les milieux gazeux dans les chambres (3, 4) ayant un volume identique soient communicants par le biais d'un canal ouvert (2) de dimensions définies,
**caractérisé en ce que**,
à l'aide d'une oscillation d'excitation appliquée sur le transducteur acoustique (1), l'impédance du transducteur acoustique (1) influencée par la densité du milieu gazeux est déterminée en fonction de la fréquence d'excitation dans une plage de fréquences définissable et **en ce que** la densité de service et/ou la vitesse du son de service du milieu gazeux en est déterminée à l'aide d'au moins trois fréquences caractéristiques du transducteur acoustique (1) oscillant dans le milieu gazeux.

**2.** Procédé selon la revendication 1, **caractérisé en ce que** l'impédance mécanique du transducteur acoustique (1) soumis à une excitation oscillatoire, influencée par la densité du milieu gazeux, est évaluée simultanément en tant qu'impédance électrique du transducteur acoustique (1).

**3.** Procédé selon l'une des revendications 1 ou 2, **caractérisé en ce qu'**une des fréquences caractéristiques du transducteur acoustique (1) est déterminée à partir de la géométrie du transducteur acoustique (1) et que d'autres fréquences caractéristiques sont déterminées à partir de l'interaction entre le transducteur acoustique (1) et le milieu gazeux.

**4.** Procédé selon la revendication 3, **caractérisé en ce que** trois fréquences caractéristiques sont déterminées en vue de la détermination de l'impédance du transducteur acoustique (1).

**5.** Procédé selon l'une des revendications 3 ou 4, **caractérisé en ce que** les fréquences caractéristiques apparaissent en des points de la courbe de réponse en fréquence en lesquels la partie imaginaire de l'impédance devient nulle.

**6.** Procédé selon l'une quelconque des revendications précédentes, **caractérisé en ce que** la mesure d'impédance est exécutée par une mesure de courant et une mesure de tension sur le transducteur acoustique (1).

**7.** Procédé selon la revendication 6, **caractérisé en ce que** la mesure de courant et la mesure de tension sont exécutées simultanément selon le principe de superposition.

**8.** Procédé selon l'une des revendications 6 ou 7, **caractérisé en ce que** la mesure de courant détecte le courant variable dans le temps qui est appliqué sur le transducteur acoustique (1) en vue d'exciter l'oscillation.

**9.** Procédé selon la revendication 8, **caractérisé en ce que** le courant variable dans le temps d'un spectre de fréquences est formé d'un courant ayant des fréquences de même amplitude et de position de phase différente dont le rapport valeur efficace sur valeur de crête est maximal.

**10.** Procédé selon l'une des revendications 6 ou 7, **caractérisé en ce que** la mesure de tension détecte la tension variable dans le temps qui peut être prélevée en tant que réaction aux oscillations du transducteur acoustique (1) influencées par le milieu gazeux.

**11.** Procédé selon l'une des revendications 6 à 10, **caractérisé en ce que** l'évaluation de la mesure de courant et de la mesure de tension est exécutée de manière analytique.

**12.** Procédé selon la revendication 11, **caractérisé en ce que** l'évaluation de la mesure de courant et de la mesure de tension est exécutée à l'aide d'une transformée de Fourier rapide.

**13.** Procédé selon l'une quelconque des revendications précédentes, **caractérisé en ce que** la densité de service $\rho_B$ est calculée avec la formule :

$$\rho_B = \frac{S_k \cdot m_M}{S_M^2 \cdot l_K} \cdot \left(\frac{f_3^2}{f_2^2} - 1\right) \cdot \left(1 - \frac{f_1^2}{f_2^2}\right)$$

où
$S_M$ - surface de la zone oscillante du transducteur acoustique (1)
$m_M$ - masse de la zone oscillante du transducteur acoustique (1)
$S_K$ - surface de la section du canal (2) entre les chambres (3, 4)
$l_K$ - longueur du canal (2) entre les chambres (3, 4)
$f_1$, $f_2$, $f_3$ - fréquences caractéristiques déterminées

**14.** Procédé selon l'une quelconque des revendications précédentes, **caractérisé en ce que** la vitesse du son de service $c_B$ est calculée avec la formule :

$$c_B = 2\pi \cdot f_2 \cdot \sqrt{\frac{V \cdot l_K}{2 \cdot S_K}}$$

où
$V$ - Volume des deux chambres (3, 4)
$S_K$ - Surface de la section du canal (2) entre les chambres (3, 4)
$l_K$ - Longueur du canal (2) entre les chambres (3, 4)
$f_2$ - Fréquence caractéristique déterminée

**15.** Procédé selon l'une quelconque des revendications précédentes, **caractérisé en ce que**, lors de la mesure d'impédance, la température et la pression du milieu gazeux sont déterminées à l'intérieur des chambres (3, 4).

**16.** Procédé selon la revendication 15, **caractérisé en ce que** la densité à l'état normal et la vitesse du son à l'état normal du milieu gazeux sont calculées à partir de la température et de la pression du milieu gazeux à l'intérieur des chambres (3, 4) à l'aide de l'équation d'état pour des gaz parfaits à partir de la densité de service et de la vitesse du son de service déterminées.

**17.** Procédé selon l'une quelconque des revendications précédentes, **caractérisé en ce que** la détermination de l'impédance du transducteur acoustique (1) est exécutée dans une unité d'évaluation (16).

**18.** Procédé selon la revendication 17, **caractérisé en ce que** les valeurs de mesures variables dans le temps du courant et de la tension du transducteur acoustique sont communiquées à l'unité d'évaluation (16) par le biais d'un convertisseur numérique-analogique (11) respectivement d'un convertisseur analogique-numérique (12).

**19.** Procédé selon l'une quelconque des revendications précédentes, **caractérisé en ce que** le transducteur acoustique (1) fonctionne en tant que transducteur électroacoustique.

**20.** Procédé selon l'une quelconque des revendications précédentes, **caractérisé en ce que** la viscosité dynamique du milieu gazeux est déterminée.

**21.** Procédé selon l'une quelconque des revendications précédentes, **caractérisé en ce que** des grandeurs spécifiques du transducteur acoustique sont intégrées dans le calcul de l'impédance.

**22.** Dispositif de mesure de la densité de service et/ou de la vitesse du son de service dans un milieu gazeux à l'aide d'un transducteur acoustique oscillant (1) qui est disposé dans un boîtier (7) de manière telle que de chaque côté du transducteur acoustique (1) sont formées des chambres (3, 4) ayant le même volume qui sont remplies par le milieu gazeux, que les milieux gazeux dans les chambres (3, 4) de même volume de chaque côté du transducteur acoustique (1) sont communicants par le biais d'un canal ouvert (2) de dimensions définies et qu'une oscillation d'excitation définie peut être appliquée sur le transducteur acoustique (1), en particulier pour l'exécution du procédé selon la revendication 1,
**caractérisé en ce que**
un dispositif de mesure détecte la réponse aux oscillations du transducteur acoustique (1) à l'intérieur d'une plage de fréquences pouvant être définie, laquelle réponse est influencée en particulier par la densité du milieu gazeux entourant le transducteur acoustique (1) et correspond à l'impédance du transducteur acoustique (1) en fonction de la fréquence d'excitation, moyennant quoi une unité d'évaluation (16) calcule la densité de service et/ou la vitesse du son de service du milieu gazeux à l'aide d'au moins trois fréquences caractéristiques du transducteur acoustique (1) oscillant dans le milieu gazeux.

**23.** Dispositif selon la revendication 22, **caractérisé en ce que** les chambres (3, 4) sont formées pour être de même taille et symétriques.

**24.** Dispositif selon la revendication 22, **caractérisé en ce que** les dimensions géométriques des chambres (3, 4) et/ou du canal ouvert (2) sont conçues de manière telle que des conditions identiques pour les deux chambres (3, 4) se forment pour le milieu gazeux et le transducteur acoustique (1).

**25.** Dispositif selon la revendication 22, **caractérisé en ce que** le canal ouvert (2) a reçu la forme d'une portion de tube qui se prolonge dans les chambres (3, 4) de chaque côté du transducteur acoustique (1).

**26.** Dispositif selon l'une des revendications 22 à 25, **caractérisé en ce que** les conduites d'amenée (5) du milieu gazeux dans les chambres (3, 4) de même volume présentent une longueur qui est grande par rapport à leur section.

**27.** Dispositif selon l'une des revendications 22 à 26, **caractérisé en ce que** le transducteur acoustique (1) est un transducteur électroacoustique.

**28.** Dispositif selon la revendication 27, **caractérisé en ce que** le transducteur acoustique (1) est un transducteur acoustique électrostatique (1).

**29.** Dispositif selon la revendication 27,' **caractérisé en ce que** le transducteur acoustique (1) est un transducteur acoustique piézoélectrique (1) à base de polymères.

**30.** Dispositif selon la revendication 27, **caractérisé en ce que** le transducteur acoustique (1) est un transducteur acoustique électrodynamique (1).

**31.** Dispositif selon l'une des revendications 22 à 30, **caractérisé en ce que**, pour déterminer l'impédance dans l'unité d'évaluation (16), les grandeurs de mesure détectées de manière analogique dans le transducteur acoustique (1) peuvent être transmises à l'unité d'évaluation (1) sous une forme numérisée par le biais d'éléments de conversion (12).

**32.** Dispositif selon la revendication 31, **caractérisé en ce que** la numérisation des grandeurs de mesure peut être exécutée dans les éléments de conversion (12) avec une fréquence d'échantillonnage d'au moins 3000 Hz.

**33.** Dispositif selon l'une des revendications 22 à 32, **caractérisé en ce que** l'unité d'évaluation (16) est formée en vue de l'exécution en temps réel de transformées de Fourier rapides.

**34.** Dispositif selon l'une des revendications 22 à 33, **caractérisé en ce que** des valeurs de mesure (14, 15) sur la température et la pression dans les chambres (3, 4) peuvent être amenées à l'unité d'évaluation (16).

**35.** Dispositif selon l'une des revendications 22 à 34, **caractérisé en ce que** la section du canal ouvert (2) est formée plus grande qu'un dixième de la surface oscillante du transducteur acoustique (1) afin de réduire les pertes mécaniques.

Fig. 1

Fig. 2

Fig. 3

Fig. 4

EP 1 837 649 B1

Fig. 5

EP 1 837 649 B1

Fig. 6

24

Fig. 7

EP 1 837 649 B1

**EP 1 837 649 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3741558 A1

**In der Beschreibung aufgeführte Nicht-Patentliteratur**

- Theory of the Greenspan viscosimeter. **Gillis, Keith et al.** Journal of the Acoustical Society of America. AIP/ Acoustical Society of America, 01. Juli 2003, vol. 114, 166-173